# EUROPÄISCHE PATENTSCHRIFT

(11) **EP 3 183 069 B1**
(45) Veröffentlichungstag und Bekanntmachung des Hinweises auf die Patenterteilung: **13.03.2019**
(21) Anmeldenummer: 15747131.9
(22) Anmeldetag: 28.07.2015
(51) Int. Cl.: B07C 3/00

(54) **TRANSPORTWAGEN, ÜBERLADEBRÜCKE, VERSANDGUTSORTIERANLAGE UND NACHRÜSTSATZ FÜR VERSANDGUTSORTIERMASCHINE**
TRANSPORT CARRIAGE, TRANSFER BRIDGE, SORTING DEVICE FOR MAILINGS AND RETROFIT KIT FOR SORTING MACHINE FOR MAILINGS
CHARIOT DE TRANSPORT, PONT DE TRANFERT, DISPOSITIF DE TRI POUR DES ENVOIS, JEU DE RATTRAPAGE POUR MACHINE DE TRI D'ENVOIS

(30) Priorität: 22.08.2014 DE 102014216734
(43) Veröffentlichungstag der Anmeldung: 28.06.2017
(73) Patentinhaber: Siemens Aktiengesellschaft, 80333 München (DE)
(72) Erfinder: EISSER, Dirk-Udo, 78479 Reichenau (DE); WILKE, Wolf-Stephan, 78467 Konstanz (DE); ZIMMERMANN, Armin, 78465 Konstanz (DE)
(74) Vertreter: Maier, Daniel Oliver
(86) Internationale Anmeldenummer: PCT/EP2015/067288
(87) Internationale Veröffentlichungsnummer: WO 2016/026658

(56) Entgegenhaltungen:
- EP-A1- 2 607 277
- DE-A1-102011 077 793

## Beschreibung

Die vorliegende Erfindung betrifft einen Transportwagen zum Transport von Versandgut, mit mehreren übereinander angeordneten Aufnahmebehältern zur Aufnahme von Versandgut von einer Versandgutsortiermaschine. Ferner betrifft die Erfindung eine Überladebrücke zum Überladen von Versandgut von einer Versandgutsortiermaschine an einen Transportwagen. Darüber hinaus betrifft die Erfindung eine Versandgutsortieranlage mit einer Versandgutsortiermaschine. Des Weiteren betrifft die Erfindung einen Nachrüstsatz für eine Versandgutsortiermaschine.

Transportwagen, Überladebrücken und Versandgutsortieranlagen mit Versandgutsortiermaschinen oder einer weiteren Verarbeitungsmaschine sind allgemein bekannt. Versandgutsortiermaschinen werden verwendet, um Versandgut, beispielsweise Briefe, Päckchen und Pakete, für deren Zustellung zu sortieren. Dabei wird das Versandgut durch die Versandgutsortiermaschine in Zustellziele repräsentierende Fächer sortiert. Um das Versandgut für die Zustellung geordnet sortieren zu können, kann es notwendig sein, das Versandgut mehrfach zu sortieren. Das Versandgut wird beispielsweise nach dem Radixsort-Verfahren sortiert und ist hierfür mehrfach durch die Versandgutsortiermaschine zu sortieren.

Um das Versandgut von den Sortierfächern zurück zu einem Eingang der Versandgutsortiermaschine oder einer anderen Verarbeitungsmaschine transportieren zu können, sind Transportwagen mit mehreren übereinander angeordneten Aufnahmebehältern bekannt. Ein solcher Transportwagen ist in der DE 10 2011 077 793 A1 offenbart.

Aus der Veröffentlichung EP 2 607 277 A1 (Neopost Technologies) ist ein System zum Verbessern des Stapelns von flachen Gegenständen offenbart, bei dem die flachen Gegenstände als Satz in einem Sortierbehälter auf einer Stapelfläche hochkant gestapelt werden. Eine Antriebsvorrichtung übt dabei einen einstellbaren Druck auf den Satz von Stapeln so aus, dass eine genaue und aufwendige Messung des Druckes überflüssig wird ohne dass dadurch eine Blockierung auftreten kann.

Ein manuelles Verladen des zumindest einmal sortierten Versandgutes von der Versandgutsortiermaschine in den Transportwagen ist jedoch mühsam.

Die Aufgabe besteht also darin, einen Transportwagen, eine Überladebrücke, eine Versandgutsortieranlage und einen Nachrüstsatz für eine Versandgutsortiermaschine bereitzustellen, mit denen das sortierte Versandgut einfacher handhabbar ist.

Erfindungsgemäß wird ein Transportwagen der eingangs genannten Art zur Verfügung gestellt, wobei zumindest einer der Aufnahmebehälter einen verschiebbaren Boden aufweist. Darüber hinaus wird erfindungsgemäß eine Versandgutsortieranlage der eingangs genannten Art bereitgestellt, die einen erfindungsgemäßen Transportwagen aufweist. Des Weiteren wird erfindungsgemäß ein Nachrüstsatz der eingangs genannten Art bereitgestellt, der einen erfindungsgemäßen Transportwagen aufweist.

Beim Beladen des Aufnahmebehälters und beim Einladen von weiterem Versandgut in den Aufnahmebehälter braucht das Versandgut im Aufnahmebehälter nicht mehr über den Boden verschoben zu werden. Vielmehr kann das Versandgut mit dem verschiebbaren Boden des Aufnahmebehälters im Behälter bewegt werden. Hierdurch verringern sich das Beladen behindernde Reibkräfte zwischen dem Versandgut und dem Boden.

Ferner wird erfindungsgemäß eine Überladebrücke der eingangs genannten Art bereitgestellt, wobei die Überladebrücke eine Antriebseinrichtung aufweist, die auf einer Entladeseite der Überladebrücke angeordnet ist. Mithilfe der Antriebseinrichtung kann der Boden des Aufnahmebehälters verschoben werden, wodurch ein Be- oder Nachladen des Transportbehälters weiter vereinfacht ist.

Die erfindungsgemäße Lösung kann durch verschiedene, jeweils für sich vorteilhafte und, sofern nicht anders ausgeführt, beliebig miteinander kombinierbarer Ausgestaltungen weiter verbessert werden. Auf diese Ausgestaltungsformen und die mit ihnen verbundenen Vorteile ist im Folgenden eingegangen.

So kann der Boden entlang einer Beschickungsrichtung, in der das Versandgut in den Aufnahmebehälter bewegbar ist, verschiebbar sein. Dadurch, dass der Boden entlang der Beschickungsrichtung verschiebbar ist, kann das Versandgut einfach in einer linearen Bewegung in den Aufnahmebehälter überführt werden, ohne dass die Bewegungsrichtung des Versandgutes zu verändern wäre.

Vorzugsweise weist der Transportwagen eine bewegungsübertragend mit dem Boden verbundene Abtriebseinrichtung auf. Die Abtriebseinrichtung kann ausgebildet sein, eine Kraft aufzunehmen und zur Bewegung des Bodens an diesen weiterzuleiten, sodass der Boden nicht von Hand bewegt zu werden braucht.

Beispielsweise kann die Antriebseinrichtung der Überladebrücke ausgebildet sein, eine Bewegung in die Abtriebseinrichtung des Transportwagens einzuleiten.

Alternativ kann der Transportwagen einen Antrieb, beispielsweise einen Elektromotor, aufweisen, mit dem der Boden des wenigstens einen Aufnahmebehälters verschiebbar ist. Ein solcher Motor würde jedoch das Gewicht des Transportwagens erhöhen. Insbesondere wenn alle Böden der Aufnahmebehälter verschiebbar ausgebildet sind und wenn für jeden der Böden ein Motor vorzusehen wäre, würde das Gewicht des Transportwagens so weit ansteigen, dass ein Handhaben des Transportwagens erschwert würde.

Die Abtriebseinrichtung ist also vorzugsweise ausgebildet, eine mechanische Bewegung aufzunehmen und an den Boden zu übertragen, sodass zum Bewegen des Bodens keine Energiewandler, zum Beispiel zum Wandeln elektrischer Energie in Bewegungsenergie, im Transportwagen unterzubringen sind.
In einem besonders vorteilhaften weil einfachen Ausführungsbeispiel ist der Boden durch ein Transport- oder Förderband gebildet. Insbesondere eine zur Innenseite des Aufnahmebehälters weisende Seite des Förderbandes bildet dessen Boden. Die Abtriebseinrichtung ist vorzugsweise bewegungsübertragend mit einer Walze des Förderbandes verbunden.

Die Antriebseinrichtung der Überladebrücke kann eine Rotationsbewegung in die Abtriebseinrichtung einleiten, wobei die Abtriebseinrichtung die Rotationsbewegung als eine Linearbewegung des zur Innenseite des Aufnahmebehälters weisenden Abschnittes des Transportbandes wandelt. Beispielsweise können Antriebs- und Abtriebseinrichtung jeweils als Zahnräder oder -walzen ausgebildet sein, die im Betrieb aneinander anliegen, um den Boden zu verschieben. Insbesondere kann die Antriebseinrichtung als ein an das Förderband anlegbares Reibrad ausgebildet sein, dessen Drehung im Betrieb das Förderband antreibt. In diesem Fall bildet das Förderband zusammen mit der Walze die Abtriebseinrichtung aus. Die Antriebseinrichtung kann manuell von einem Bediener gegen die Abtriebseinrichtung gehalten werden, um ein Übertragen der Bewegung zu ermöglichen.

Die Überladebrücke kann an ihrer Entladeseite eine schwenkbare Überbrückungsklappe aufweisen, die in ihrer Betriebsstellung eine Überladefläche der Überladebrücke verlängert. Insbesondere kann die Überladefläche durch die Überbrückungsklappe so weit verlängert sein, dass zwischen der Überladebrücke und dem Transportwagen beim Überladen des Versandgutes keine Lücke vorhanden ist, in die das Versandgut, beispielsweise ein Brief, fallen könnte. Vorzugsweise liegt die Überbrückungsklappe beim Überladen auf dem Boden des Aufnahmebehälters auf, sodass kleinere Fehlpositionierungen des Transportwagens mit Bezug auf die Überladebrücke nicht zu einer Lücke führen. In ihrer Betriebsstellung fluchtet die Überbrückungsklappe vorzugsweise im Wesentlichen mit der Überladefläche und überragt parallel zur Überladefläche andere Elemente der Überladebrücke.

Ferner kann die Überbrückungsklappe in ihrer Betriebsstellung über der Antriebseinrichtung angeordnet sein, selbst wenn die Antriebseinrichtung an der Abtriebseinrichtung des Transportwagens anliegt. Eine Kollision des zu verladenden Versandgutes mit der Antriebs- oder der Abtriebseinrichtung ist so sicher verhindert. Das Versandgut kann also einfach von der Überladefläche über die Überbrückungsklappe auf den bewegbaren Boden des Aufnahmebehälters geschoben werden. Der Boden bewegt das Versandgut beim Be- oder beim Nachladen in der Beschickungsrichtung, sodass lediglich auf der Überladebrücke befindliches Versandgut zu verschieben ist. Das im Aufnahmebehälter befindliche Versandgut braucht nicht manuell bewegt zu werden, wodurch sich das Handhaben des Versandgutes vereinfacht.

Zusätzlich kann auch die Überladefläche verschiebbar und beispielsweise durch ein Förderband, das durch die Antriebeseinrichtung bewegbar sein kann, gebildet sein.

Der Aufnahmebehälter kann wenigstens eine Stapelstütze und insbesondere zumindest zwei Stapelstützen aufweisen, die ein Verkippen des Versandgutes im Aufnahmebehälter verhindern. Die Stapelstützen können in der Beschickungsrichtung vor und/oder hinter dem womöglich senkrecht stehenden Versandgut angeordnet werden. Wird das Versandgut durch den verschiebbaren Boden innerhalb des Aufnahmebehälters bewegt, so folgt die wenigstens eine Stapelstütze dieser Bewegung. Beispielsweise kann die zumindest eine Stapelstütze so entlang der Beschickungsrichtung verschiebbar gelagert sein, dass die vom Versandgut auf die Stapelstütze einwirkende Bewegungskraft die Stapelstütze verschiebt. Alternativ kann die Stapelstütze unabhängig vom Versandgut bewegungsübertragend mit dem verschiebbaren Boden verbunden sein. Die Stapelstützen können um eine in der Beschickungsrichtung verlaufende Schwenkachse in den Aufnahmebehälter schwenkbar sein. Sind mehrere Stapelstützen vorgesehen, können diese parallel zu der Beschickungsrichtung relativ zueinander verschiebbar sein, um eine unterschiedliche Anzahl an Versandgütern zwischen zwei Stapelstützen anordnen zu können. Stapelstützen können alternativ auch als Trennmesser bezeichnet sein.

Auch die Überladebrücke kann zumindest eine Stapelstütze aufweisen. Die zumindest eine Stapelstütze der Überladebrücke ist vorzugsweise an der Entladeseite der Überladebrücke angebracht. Durch diese Stapelstütze wird verhindert, dass auf den Transportwagen zu bewegendes Versandgut von der Überladebrücke fällt.

Um zu ermöglichen, dass auf der Überladebrücke angeordnetes Versandgut nicht nur in einen der Aufnahmebehälter, sondern in alle der Aufnahmebehälter überführt werden kann, können die Aufnahmebehälter durch den Transportwagen in der Höhe verschieblich gehalten sein. Insbesondere kann die Lage jedes der Aufnahmebehälter in der Höhe so geändert werden, dass der Boden des betreffenden Aufnahmebehälters im Wesentlichen auf der gleichen Höhe, wie die Überladefläche der Überladebrücke angeordnet ist. Dabei kann die Höhe der Aufnahmebehälter manuell oder maschinell geändert werden. Insbesondere wenn viel oder schweres Versandgut in den Aufnahmebehältern anzuordnen ist, ist ein manuelles Ändern der Lage der Versandgutbehälter jedoch schwierig. Vorzugsweise weist der Transportwagen also wenigstens einen Antrieb, beispielsweise einen Elektromotor, auf, mit Hilfe dessen die Höhe der Aufnahmebehälter, zum Beispiel durch einen Riemen- oder einen Spindeltrieb, änderbar ist. Dabei können alle Aufnahmebehälter gleichzeitig oder einzelne beziehungsweise ausgewählte Aufnahmebehälter parallel zur Höhenrichtung bewegt werden.

Um zu verhindern, dass der Transportwagen umkippt, insbesondere wenn die Aufnahmebehälter befüllt oder in einer hohen Position angeordnet sind, kann der Transportwagen eine Verkippsicherung aufweisen. Die Verkippsicherung ist zum Beispiel ausgebildet, den Transportwagen in einer im Boden, auf dem der Transportwagen steht, angeordneten Verankerung zu halten. Zum Beispiel weist die Verkippsicherung einen Bajonettverschluss auf.

Um die Überladebrücke an der Versandgutsortiermaschine anbringen zu können, weist die Überladebrücke an ihrer Beladeseite vorzugsweise eine Montageeinrichtung zur Montage an der Versandgutsortiermaschine auf. Im montierten Zustand der Überladebrücke weist die Beladeseite zur und die Entladeseite weg von der Versandgutsortiermaschine.

Insbesondere wenn die Überladebrücke Teil des Nachrüstsatzes ist, kann die Überladebrücke als Adapter zwischen der Versandgutsortiermaschine und dem Transportwagen vorgesehen sein. Durch die Montageeinrichtung kann die Überladebrücke einfach an der Versandgutsortiermaschine angebracht werden.

Die Montageeinrichtung kann einen Teil einer Linearführung oder -lagerung aufweisen, die ein geführtes Bewegen der Überladebrücke entlang der Versandgutsortiermaschine ermöglicht. Beispielsweise kann die Linearführung ein Linearlager sein. Ein Teil der Linearführung kann an der Versandgutsortiermaschine befestigbar sein. Ein weiteres Teil der Linearführung ist vorzugsweise ein integraler Bestandteil der Überladebrücke. Die Linearführung kann beispielsweise ein Kugellager oder ein Rillenlager aufweisen, sodass die Überladebrücke mit geringem Kraftaufwand entlang der Versandgutsortiermaschine bewegbar ist. Ferner kann die Überladebrücke maschinell, also motorisch unterstützt, entlang der Versandgutsortiermaschine verschiebbar sein.

Um ein Verformen der Überladebrücke beim Überladen des Versandgutes durch das Gewicht des Versandgutes zu verhindern, kann sich die Überladebrücke zusätzlich zur Montageeinrichtung an der Versandgutsortiermaschine abstützen. Insbesondere kann die Montageeinrichtung in einem oberen Bereich der Überladebrücke angeordnet sein. In einem unteren Bereich der Überladebrücke kann sich diese an der Versandgutsortiermaschine abstützen. Vorzugsweise weist die Überladebrücke eine Rolle oder ein Rad auf, über welches sich die Überladebrücke an der Versandgutsortiermaschine abstützt und welches über die Versandgutsortiermaschine rollt, wenn die Überladebrücke entlang der Versandgutsortiermaschine verschoben wird.

Damit der die Position der Aufnahmebehälter in der Höhenrichtung ändernde Motor mit Energie und insbesondere mit elektrischem Strom versorgt werden kann, kann der Transportwagen eine Batterie und beispielsweise eine wiederaufladbare Batterie aufweisen. Um das zusätzliche Gewicht der Batterie einzusparen, weist der Transportwagen vorzugsweise jedoch zumindest einen Stecker auf, über den dem Motor Energie und beispielsweise auch Steuer- oder Datensignale zugeführt werden können. Die Überladebrücke kann einen Gegenstecker für den Stecker des Transportwagens aufweisen.

Der zumindest eine Stecker ist zum Beispiel an einem entgegen der Beschickungsrichtung weisenden Ende des Transportwagens vorgesehen. Zusätzlich oder alternativ kann der Transportwagen einen Stecker aufweisen, der an einem in der Beschickungsrichtung weisenden Ende des Transportwagens vorgesehen ist. Weist der Transportwagen sowohl an seinem entgegen der Beschickungsrichtung weisenden Ende als auch an seinem in der Beschickungsrichtung weisenden Ende jeweils mindestens einen Stecker auf, so ist der Transportwagen einfach in und entgegen der Beschickungsrichtung kontaktierbar und kann flexibel eingesetzt werden.

Zum Beispiel kann die Versandgutsortiermaschine an ihrem Versandguteingang zumindest einen Stecker zur Versorgung des Transportwagens mit elektrischer Energie und/oder Signalen aufweisen. Bereits sortiertes Versandgut kann der Versandgutsortiermaschine mit dem Transportwagen eingangsseitig also einfach aus jedem der Aufnahmebehälter zu einer weiteren Sortierung zugeführt werden, wobei die Aufnahmebehälter des Transportwagens auch dann ohne Weiteres und beispielsweise motorisiert in der Höhe verschiebbar sind, wenn der Transportwagen eingangsseitig mit der Versandgutsortiermaschine elektrische Energie und Signale übertragend gekoppelt ist. Zusätzlich kann erfindungsgemäß ein manueller Arbeitsplatz, beispielsweise ein Arbeitstisch, bereitgestellt werden, auf dem Versandgut weiter gehandhabt werden kann. Beispielsweise kann nicht maschinell sortierbares Versandgut auf dem Arbeitsplatz bereitgestellt und in auf dem Transportwagen befindliches Versandgut einsortiert werden.

Der Arbeitsplatz kann frei stehend, an der Versandgutsortiermaschine oder an einer anderen Maschine beziehungsweise an einem anderen Objekt, etwa einer Wand, befestigt verwendbar sein.

Ferner kann der Arbeitsplatz alle oder ausgewählte Merkmale der Überladebrücke aufweisen. Da diese Merkmale bereits mit Bezug auf die Überladebrücke beschrieben sind, ist diese Beschreibung der Kürze halbe mit Bezug auf den Arbeitsplatz nicht vollständig wiederholt.

Insbesondere kann der Arbeitsplatz wenigstens eine Antriebseinrichtung und/oder eine Überbrückungsklappe aufweisen, wobei die Antriebseinrichtung und die Überbrückungsklappe in Aufbau und Funktion der Antriebseinrichtung und der Überbrückungsklappe der Überladebrücke entsprechen können. Außerdem kann der Arbeitsplatz wie die Überladebrücke Anschlüsse, zum Beispiel Stecker, aufweisen, die eine Steckverbindung mit den Steckern des Transportwagen eingehen können, um den Transportwagen beispielsweise mit elektrischer Energie und/oder Signalen, insbesondere Steuer- und/oder Datensignale, zu versorgen.

Der Stecker des Transportwagens kann also zumindest entgegen der Beschickungsrichtung mit dem Stecker des Arbeitsplatzes verbindbar sein. Weist der Transportwagen zusätzlich oder alternativ den zumindest einen an seinem in die Beschickungsrichtung weisenden Ende angeordneten Stecker auf, kann der Beschickungswagen auch in der Beschickungsrichtung mit dem Arbeitsplatz koppelbar sein.

Jeder der Aufnahmebehälter ist also auch am manuellen Arbeitsplatz in und/oder entgegen der Beschickungsrichtung gut zugänglich. Versandgut kann somit jedem der Aufnahmebehälter hinzugefügt oder aus diesem entnommen werden, wobei das Versandgut nur horizontal bewegt zu werden braucht, wobei die Aufnahmebehälter des Transportwagens auch dann ohne Weiteres und beispielsweise motorisiert in der Höhe verschiebbar sind, wenn der Transportwagen mit dem manuellen Arbeitsplatz elektrische Energie und Signale übertragend gekoppelte ist.

Stecker und weitere Elektrik zur Montage am Versandguteingang und/oder der Arbeitsplatz können Teil der Versandgutsortieranlage und/oder des Nachrüstsatzes sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Es zeigen:
Figur 1 ein erstes Ausführungsbeispiel eines erfindungsgemäßen Transportwagens in einer geschnittenen Vorderansicht,
Figur 2 das Ausführungsbeispiel der Figur 1 mit höher angeordneten Aufnahmebehältern,
Figur 3 das Ausführungsbeispiel des Transportwagens der Figuren 1 und 2 und ein Ausführungsbeispiel einer erfindungsgemäßen Überladebrücke,
Figuren 4-7 die Ausführungsbeispiele des Transportwagens und der Überladungsbrücke der bisherigen Figuren bei einem Überladevorgang vom Versandgut.

Im Folgenden ist die Erfindung beispielhaft anhand von Ausführungsformen mit Bezug auf die Zeichnungen erläutert. Die unterschiedlichen Merkmale der Ausführungsformen können dabei unabhängig voneinander kombiniert werden, wie es bei den einzelnen vorteilhaften Ausgestaltungen bereits dargelegt wurde.

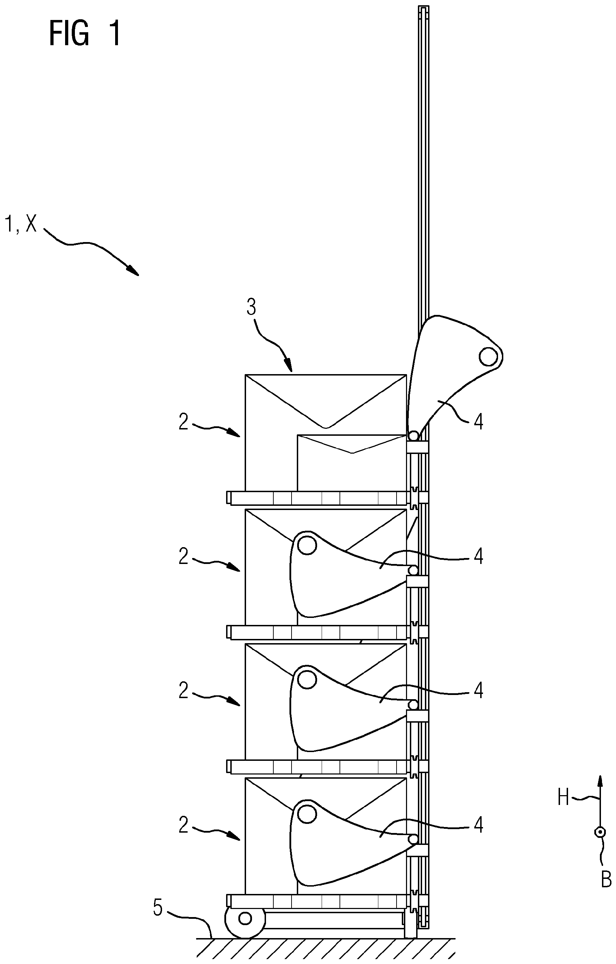

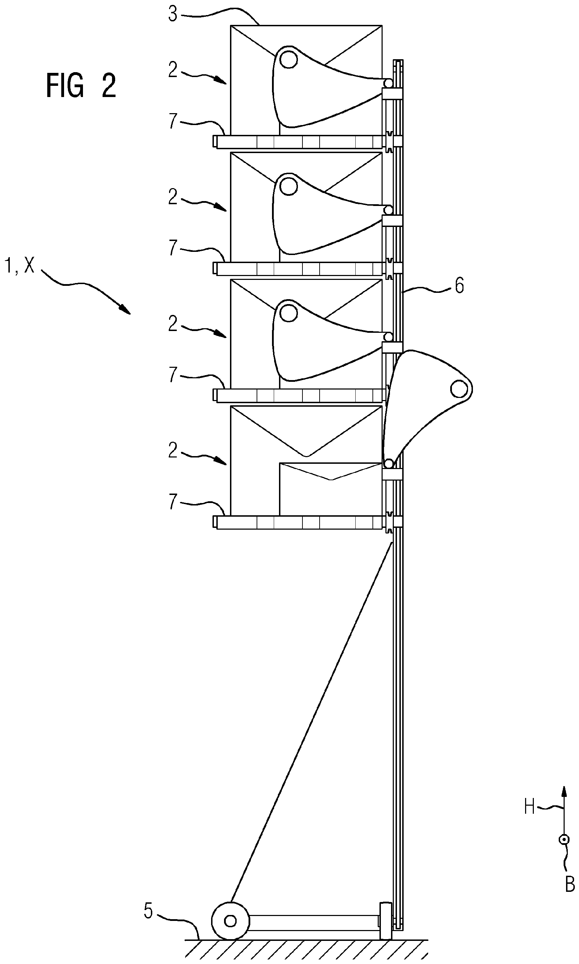

Zunächst sind Aufbau und Funktion eines erfindungsgemäßen Transportwagens mit Bezug auf das Ausführungsbeispiel der Figuren 1 und 2 beschrieben.

Figur 1 zeigt den Transportwagen 1 schematisch in einer geschnittenen Frontalansicht, wobei die Schnittebene senkrecht zu einer Beschickungsrichtung B, in der der Transportwagen 1 mit Versandgut beschickbar ist, verläuft.

Der Transportwagen 1 weist gemäß dem Ausführungsbeispiel der Figur 1 vier Aufnahmebehälter 2 auf, die jeweils mit Versandgut 3, beispielsweise in Form von Briefen, in der Beschickungsrichtung B beschickt sind. Selbstverständlich kann der Transportwagen 1 auch mehr oder weniger als die vier dargestellten Aufnahmebehälter 3 aufweisen. Insbesondere kann der Transportwagen 1 zwei, drei oder mehr als vier Aufnahmebehälter 3 aufweisen.

Die Aufnahmebehälter 2 sind in einer Höhenrichtung H des Transportwagens 1 übereinander angeordnet, um bei einer möglichst geringen Stellfläche des Transportwagens 1 möglichst viel Versandgut 3 in den Aufnahmebehältern 2 vorsehen zu können.

Für jeden der Aufnahmebehälter 2 weist der Transportwagen 1 zumindest eine Stapelstütze 4 auf, mit der ein Umkippen des Versandgutes 3 verhinderbar ist. Die Stapelstütze 4 kann um eine parallel zur Beschickungsrichtung B verlaufende Achse herum in den jeweiligen Aufnahmebehälter 2 geschwenkt werden, sodass die Stapelstütze 4 in der Beschickungsrichtung B hinter dem Versandgut 3 angeordnet ist. Ferner kann der Transportwagen 1 für zumindest einen der Aufnahmebehälter 2 eine zweite Stapelstütze 4 aufweisen, die ebenfalls um eine parallel zur Beschickungsrichtung B verlaufende Schwenkachse herum in den jeweiligen Aufnahmebehälter 2 schwenkbar ist, sodass das Versandgut 3 zwischen zwei Stapelstützen 4 angeordnet und gegen ein Verkippen gesichert ist.

Die Aufnahmebehälter 2 können als Aufnahmeebenen ausgebildet sein. Alternativ können die Aufnahmebehälter 2 Seitenwände aufweisen, die parallel zur Beschickungsrichtung B verlaufen und die ein Herabfallen des Versandgutes 3 quer zur Beschickungsrichtung B verhindern.

Der Transportwagen 1 kann Teil eines Nachrüstsatzes X für eine Versandgutsortiermaschine sein.

Figur 2 zeigt das Ausführungsbeispiel der Figur 1 schematisch in der geschnittenen Frontalansicht, wobei die Aufnahmebehälter 2 in der Figur 2 in der Höhenrichtung H weiter entfernt von einer Aufstellfläche 5 des Transportwagens 1 entfernt angeordnet sind, als in der Figur 1. Die Aufnahmebehälter 2 können nämlich in der Höhenrichtung H verschieblich durch den Transportwagen 1 gehalten sein. Beispielsweise kann der Transportwagen 1 zumindest eine Halte- oder Führungsstange 6 aufweisen, entlang der die Position der Aufnahmebehälter 2 in der Höhenrichtung H änderbar ist. Die Halte- oder Führungsstange 6 kann dabei die Bewegung der Aufnahmebehälter 2 parallel zur Höhenrichtung H führen. Die Aufnahmebehälter 2 sind einzeln oder gemeinsam in der Höhenrichtung H verschiebbar. Beispielsweise sind die Aufnahmebehälter 2 bewegungsübertragend mit einem Zahnriemen oder einer Spindel verbunden. Der Zahnriemen oder die Spindel erstreckt sich parallel zur Höhenrichtung H. Mit dessen Hilfe sind die Aufnahmebehälter 2 parallel zur Höhenrichtung H bewegbar. Der Zahnriemen und die Spindel können durch einen Antrieb 6a, zum Beispiel einen Motor, etwa ein Elektromotor, antreibbar oder angetrieben sein. Sollen die Aufnahmebehälter 2 einzeln bewegbar sein, so können diese lösbar mit dem Zahnriemen oder der Spindel verbindbar sein oder es kann für jeden der Aufnahmebehälter 2 ein Antrieb 6a vorgesehen sein.

Insbesondere steht das Versandgut 3 auf einem Boden 7 des Aufnahmebehälters 2.

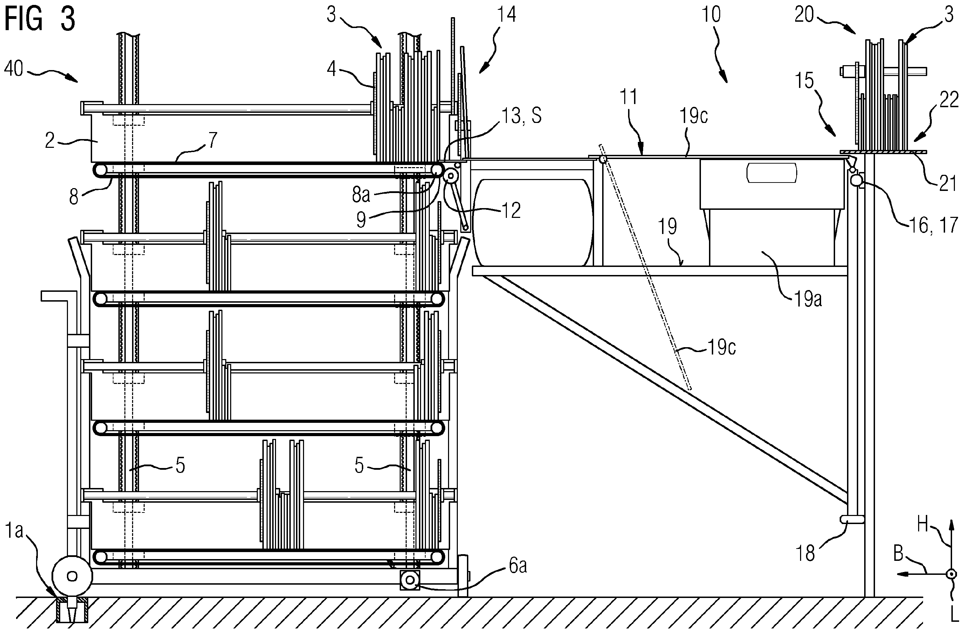

Figur 3 zeigt das Ausführungsbeispiel des Transportwagens 1 der Figuren 1 und 2 in einer Seitenansicht zusammen mit einem ersten Ausführungsbeispiel einer Überladebrücke 10, die an einer Versandgutsortiermaschine 20 angebracht ist.

Im Ausführungsbeispiel der Figur 3 ist ein oberster der Aufnahmebehälter 2 in der Höhenrichtung H so angeordnet, dass dessen Boden 7 mit einer Überladefläche 11 der Überladebrücke 10 auf dem gleichen Höhenniveau angeordnet ist, wie der Boden 7.

Sind der Boden 7 und die Überladefläche 11 auf einer gleichen Höhe angeordnet, so kann das Versandgut 3 ohne weiteres von der Überladebrücke 10 in den Aufnahmebehälter 2 verbracht und insbesondere verschoben werden.

Von der Versandgutsortiermaschine 20 kann das Versandgut 3 einfach auf die Überladefläche 11 aufgeschoben werden, wenn die Überladefläche 11 in der Höhenrichtung H auf der gleichen Höhe angeordnet ist, wie ein Boden 21 eines Sortierfachs 22 der Versandgutsortiermaschine 20. Folglich können der Boden 7 des Aufnahmebehälters 2, die Überladefläche 11 der Überladebrücke 10 und der Boden 21 des Sortierfachs 22 der Versandgutsortiermaschine 20 in der Höhenrichtung H nebeneinander angeordnet sein, sodass das Versandgut 2 einfach aus dem Sortierfach 22 über die Überladefläche 11 der Überladebrücke 10 in den Aufnahmebehälter 2 des Transportwagens 1 geschoben werden kann. Jeder der Aufnahmebehälter 2 kann in dieser Höhenposition angeordnet und somit einfach beladen werden.

Im Ausführungsbeispiel der Figur 3 befindet sich bereits Versandgut 3 im Aufnahmebehälter 2. Soll nun das im Sortierfach 22 angeordnete Versandgut 3 in den Aufnahmebehälter 2 verschoben werden, so wäre nicht nur das neu in den Aufnahmebehälter 2 zu verbringende Versandgut 3 in diesen einzuschieben. Vielmehr müsste auch das bereits im Aufnahmebehälter 2 angeordnete Versandgut 3 verschoben werden. Da Versandgut 3 in größeren Mengen ein nicht unerhebliches Gewicht aufweist und nur schwer zu verschieben ist, würde das Auf- oder Nachfüllen des Aufnahmebehälters 2 einen Benutzer des Transportwagens 1 und der Überladebrücke 10 auf Dauer belasten. Um ein Beladen des Aufnahmebehälters 2 zu vereinfachen, ist der Boden 7 des Aufnahmebehälters 2 verschiebbar ausgebildet. Dadurch, dass der Boden 7 verschiebbar ausgebildet ist, braucht das bereits im Aufnahmebehälter 2 angeordnete oder neu in diesen zu verbringende Versandgut 3 nicht mehr über den Boden 7 verschoben werden. Vielmehr kann sich der Boden 7 mit dem Versandgut 3 bewegen, sodass zwischen dem Versandgut 3 und dem Boden 7 auftretende Reibungskräfte vermieden werden.

Im Ausführungsbeispiel der Figur 3 bildet ein ins Innere des Aufnahmebehälters 2 weisender Abschnitt eines Transport- oder Förderbandes 8 den Boden 7, sodass der Boden 7 beweglich ist, ohne dass der Boden 7 durch seine Bewegung aus dem Aufnahmebehälter 2 hinaus bewegt wird.

Um das Versandgut 3 einfach handhaben zu können, kann sich die Stapelstütze 4 des Transportwagens 1 zusammen mit dem Boden 7 bewegen. Beispielsweise können der Boden 7 und die Stapelstütze 4 bewegungsübertragend miteinander verbunden sein. Alternativ kann die Bewegung des Versandguts 3 mit dem Boden 7 die Stapelstütze 4 in der Beschickungsrichtung B verschieben.

Der Transportwagen 1 kann eine Abtriebseinrichtung 9 aufweisen, welche ein Antriebsmoment aufnimmt und an den Boden 7 weiter leitet, um diesen zu verschieben. Beispielsweise kann die Abtriebseinrichtung 9 ein Zahnrad aufweisen oder sein. In einer besonders einfachen, weil einfach auszubildenden und zu bedienenden Ausgestaltungsform, kann die Abtriebseinrichtung 9 durch eine Umlenkrolle 8a für das Förderband 8 und das Förderband 8 selbst ausgebildet sein.

Um ein Antriebsmoment in das Förderband 8 und somit den Boden 7 einleiten zu können, weist die Überladebrücke 10 vorzugsweise eine Antriebseinrichtung 12 auf, welche bewegungsübertragend mit dem Boden 7 verbindbar ist. Im Ausführungsbeispiel der Figur 3 ist die Antriebseinrichtung 12 als eine Reibrolle ausgebildet, die gegen das an der Umlenkrolle 8a anliegende Förderband 8 anlegbar und insbesondere drückbar ist. Dreht sich die Reibrolle, so überträgt der Reibschluss zwischen Reibrolle und Förderband 8 diese Drehbewegung auf das Förderband 8, sodass sich der Boden 7 des Aufnahmebehälters 2 bewegt. Insbesondere bewegt sich der Boden 7 parallel zur Beschickungsrichtung B. Die Antriebseinrichtung 12 und beispielsweise die Reibrolle kann elektrisch an- oder betreibbar sein. Anhand der Erzeugung der Bewegung durch die Überladebrücke 10 braucht der Transportwagen 1 nicht mit Antriebsmotoren für den Boden 7 oder gar die Böden 7 und insbesondere für das Förderband 8 versehen zu sein, sodass der Transportwagen 1 mit weniger nicht ausgestaltet ist.

Ist der Transportwagen 1 mit einer größeren Menge an Versandgut 3 beschickt und insbesondere wenn zumindest einer der Aufnahmebehälter 2 in einer wie in der Figur 2 dargestellten höheren Position angeordnet ist, droht der Transportwagen 1 unter Umständen zu verkippen. Um ein Verkippen des Transportwagens 1 zu verhindern, kann dieser eine Verkippsicherung 1a aufweisen, welche zum Beispiel an einer in der Aufstellfläche 5 vorgesehenen Verankerung fixierbar ist.

Um zu verhindern, dass sich zwischen dem Transportwagen 1 und der Überladebrücke 10 eine Lücke bildet, durch die Versandgut 3 fallen kann, kann eine Überbrückungsklappe 13 vorgesehen sein, welche die Überladefläche 11 und den Boden 7 in ihrer Betriebsstellung S kontaktiert und insbesondere zumindest auf dem Boden 7 aufliegt. Die Überbrückungsklappe 13 kann an einer von der Versandgutsortiermaschine 20 weg weisenden Entladeseite 14 der Überladebrücke 10 und beispielsweise der Überladefläche 11 angebracht sein. In einer Ruhestellung der

Überbrückungsklappe 13 kann diese parallel zur Höhenrichtung H verlaufen. Um die Überbrückungsklappe 13 von der Ruhestellung in die Betriebsstellung S zu überführen, kann diese einfach in Richtung von der Versandgutsortiermaschine 20 klappbar sein. Ist die Überbrückungsklappe 13 am Transportwagen 1 und beispielsweise an den Aufnahmebehälter 2 angeordnet, so kann die Überbrückungsklappe 13 aus der senkrechten Ruhestellung in Richtung auf die Versandgutsortiermaschine 20 uns insbesondere in Richtung auf die Überladefläche 11 verkippbar sein.

Die Überbrückungsklappe 13 verdeckt insbesondere die Antriebseinrichtung 12, wenn diese bewegungsübertragend mit der Abtriebseinrichtung 9 verbunden ist, sodass die sich bewegenden Teile der Antriebseinrichtung 12 und der Abtriebseinrichtung 9 das Versandgut 3 nicht beschädigen können und keine Gefahr für den Bediener der Versandgutsortiermaschine 20 darstellen.

An einer zur Versandgutmaschine 20 weisenden und der Entladeseite 14 in der Beschickungsrichtung B gegenüberliegenden Beladeseite 15 der Überladebrücke 10 kann diese eine Montageeinrichtung 16 zur Montage der Überladebrücke 10 an der Versandgutsortiermaschine 20 aufweisen. Die Montageeinrichtung 16 kann eine Linearführung 17 mit einem Lager aufweisen, sodass die Überladebrücke 10 entlang der Versandgutsortiermaschine 20 und insbesondere entlang einer Längsrichtung L der Versandgutsortiermaschine 20 bewegbar ist. Die Überladebrücke 10 ist also nicht zwangsläufig so zu dimensionieren, dass sie sich komplett entlang der Versandgutsortiermaschine 20 erstreckt. Vielmehr kann die Überladebrücke 10 von einem Abschnitt der Versandgutsortiermaschine 20 zu einem anderen Abschnitt der Versandgutsortiermaschine 20 bewegt und zum Beispiel geschoben werden, um verschiedene Sortierfächer 20 leeren zu können.

Um ungewollte Verformungen der Überladebrücke 10 und Beschädigungen der Versandgutsortiermaschine 20 durch Bewegungen der Überladebrücke 10 zu verhindern, kann diese ein Rad beziehungsweise eine Rolle 18 aufweisen, wobei sich die Überladebrücke 10 durch die Rolle 18 an der Versandgutsortiermaschine 20 abstützt und leicht entlang der Versandgutsortiermaschine 20 bewegbar ist. In der Höhenrichtung H kann die Montageeinrichtung 16 an einem oberen Ende und die Rolle 18 an einem unteren Ende der Überladebrücke 10 angeordnet sein.

In der Höhenrichtung H unterhalb der Überladefläche 10 kann eine Abstellfläche 19 vorgesehen sein. Auf der Abstellfläche 19 kann zum Beispiel ein Transportbehälter zur Aufnahme von Versandgut 3 anordenbar oder sogar angeordnet sein. Ferner kann auf der Abstellfläche 19 ein Drucker 19b zum Bedrucken von Etiketten für Transportbehälter 19a vorsehbar oder vorgesehen sein. Der Abstand der Abstellfläche 19 zur Überladefläche 10 ist vorzugsweise so bemessen, dass eine Oberkante eines zu verwendenden Transportbehälters 19a in der Höhenrichtung H mit dem Boden 21 des Sortierfachs 22 fluchtet, sodass im Sortierfach 22 angeordnetes Versandgut 3 einfach in den Transportbehälter 19a überführt werden kann.

Um die Abstellfläche 19 oder den Transportbehälter 19a einfach von oben zugänglich machen zu können, kann eine Klappe 19c vorgesehen sein, die im Ausführungsbeispiel der Figur 3 in ihrer offenen Position gestrichelt dargestellt ist. In der geschlossenen Position der Klappe 19c, in der Versandgut 3 über die Klappe 19c in Richtung auf den Transportwagen 1 zu verschiebbar ist, ist die Klappe 19c mit einer durchgezogenen Linie dargestellt.

Der Transportwagen 1 und die Versandgutsortiermaschine 20 und optional auch die Überladebrücke 10 können zusammen eine Versandgutsortieranlage 40 ausbilden.

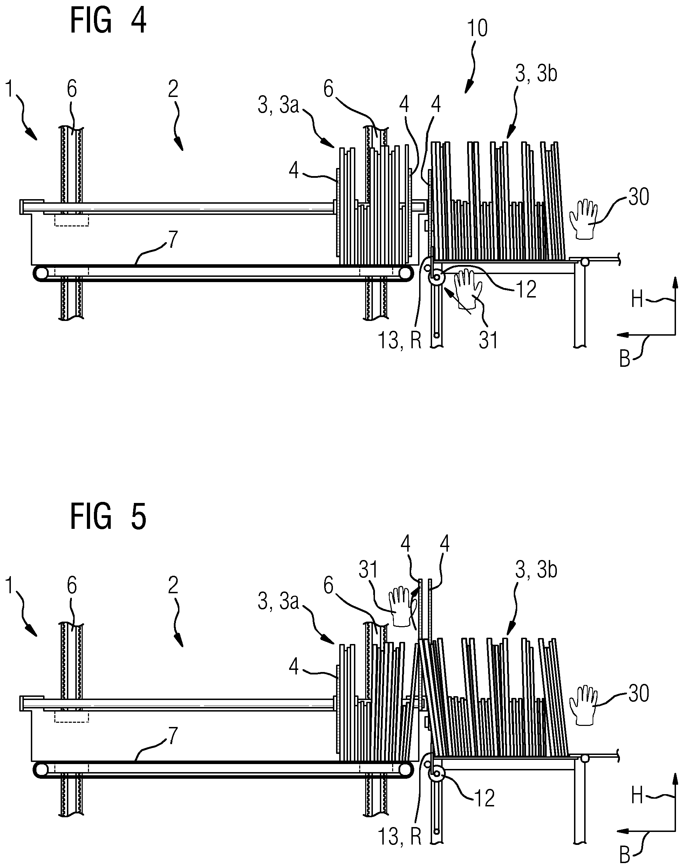

Die Figuren 4 bis 7 zeigen das Ausführungsbeispiel der bisherigen Figuren, wobei unterschiedliche Beladezustände des Transportwagens 1 und der Überladebrücke 10 dargestellt werden.

In Figur 4 ist eine erste Menge 3a an Versandgut 3 bereits im Aufnahmebehälter 2 angeordnet. Die erste Menge 3a des Versandgutes 3 ist zwischen zwei Stapelstützen 4 angeordnet, so dass das Versandgut 3 der ersten Menge 3a nicht in oder entgegen der Beschickungsrichtung B verkippen kann. Eine zweite Menge 3b an Versandgut 3 ist noch auf der Überladebrücke 10 vorgesehen, wobei auch die zweite Menge 3b in den Aufnahmebehälter 2 überführt werden soll. Zwei benachbart zueinander angeordneten Stapelstützen 4 sind insbesondere so vorgesehen, dass eine der Stapelstützen 4 an der Entladeseite 14 der Ladebrücke 10 angeordnet ist. Die andere der benachbart zueinander angeordneten Stapelstützen 4 kann eingangsseitig am Transportwagen 1 angeordnet sein.

Die Überbrückungsklappe 13 ist in ihrer Ruhestellung R dargestellt und erstreckt sich parallel zur Höhenrichtung H, sodass Versandgut 3 der zweiten Menge 3b an der Überbrückungsklappe 13 anliegt. Eine Stapelstütze 4, die an die zweite Menge 3b des Versandgutes 3 angrenzt, kann ein Verkippen der Überbrückungsklappe 13 aus der Ruhestellung R in die Betriebsstellung S verhindern beziehungsweise blockieren.

Ein Bediener, dessen Hände 30, 31 schematisch dargestellt sind, soll die zweite Menge 3b des Versandgutes 3 von der Überladebrücke 10 aus in der Beschickungsrichtung B in den Aufnahmebehälter 2 verschieben. Beispielsweise mit der rechten Hand 30 hält der Bediener die zweite Menge 3b so, dass das Versandgut 3 nicht entgegen der Beschickungsrichtung B verkippen kann.

Mit der anderen Hand 31 kann der Bediener nun die beiden benachbart zueinander angeordneten Stapelstützen 4 um eine parallel zur Beschickungsrichtung B verlaufende Schwenkachse schwenken, sodass die zweite Menge 3b des Versandgutes 3 in der Beschickungsrichtung B bis zur ersten Menge 3a verschiebbar ist.

In der Figur 5 sind die beiden benachbart zueinander angeordneten Stapelstützen 4 weg geklappt und das Versandgut 3 der zweiten Menge 3b in Richtung auf den Transportwagen 1 verkippt. Drückt der Bediener mit seiner Hand 30 die zweite Menge 3b des Versandgutes 3 in der Beschickungsrichtung B in Richtung auf den Transportwagen 1, so kann durch die zweite Menge 3b die Überbrückungsklappe 13 aus der Ruhestellung R in die Betriebsstellung S verkippt werden. Alternativ kann der Bediener mit seiner Hand 31 die Überbrückungsklappe 13 manuell umklappen. Darüber hinaus kann ein Betätigen der Antriebseinrichtung 12 ein Verkippen der Überbrückungsklappe 13 in die Betriebsstellung S auslösen.

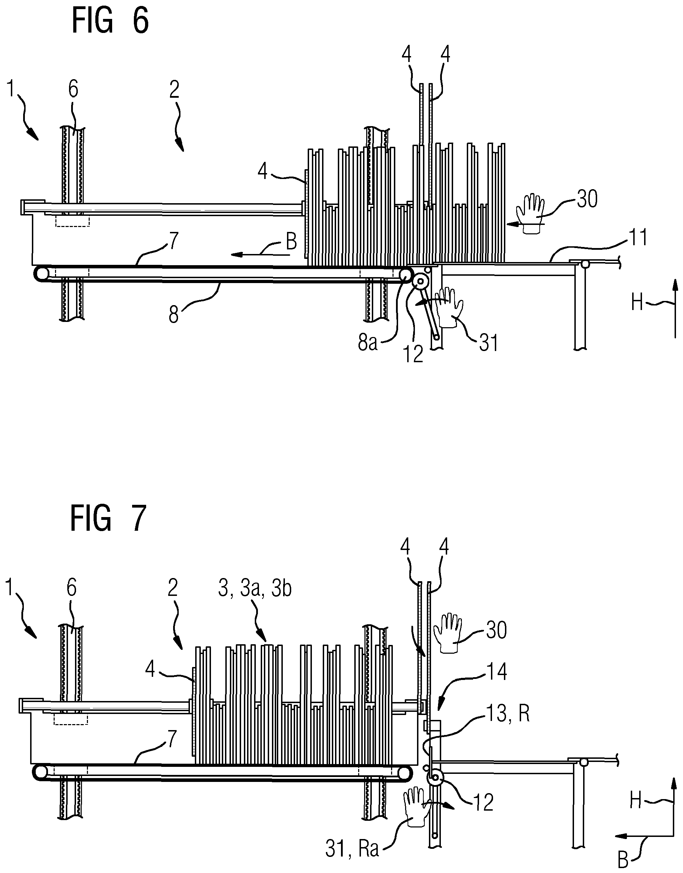

Im Ausführungsbeispiel der Figur 6 betätigt der Bediener mit der Hand 31 die Antriebseinrichtung 12 und drückt diese insbesondere im Bereich der Umlenkrolle 8a gegen das Förderband 8. Weist die Antriebseinrichtung 12 die angetriebene Reibrolle auf, so reicht es aus, die Reibrolle gegen das Förderband 8 zu pressen, um ein Verschieben des Bodens 7 in der Beschickungsrichtung B zu erreichen. Der Bediener braucht mit seiner Hand 30 nur die Kraft aufzubringen, die nötig ist, um die zweite Menge 3b des Versandgutes 3 über die Überladefläche 11 zu schieben. Die erste Menge 3a des Versandgutes 3 wird mit dem Boden 7 zusammen bewegt, so dass keine zwischen dem Versandgut 3 und dem Boden 7 auftretenden Reibkräfte zu überwinden sind.

In der Figur 7 ist auch die zweite Menge 3b des Versandgutes 3 in den Aufnahmebehälter 2 eingeschoben. Mit der Hand 31 kann der Bediener die Antriebseinrichtung 12 in ihre dargestellte Ruhestellung Ra überführen, wodurch die Überbrückungsklappe 13 zurück in ihre Ruhestellung R überführbar ist. Alternativ kann der Bediener die Überbrückungsklappe 13 manuell in die Ruhestellung R überführen. Beispielsweise mit seiner Hand 30 kann der Bediener die beiden beieinander liegenden Stapelstützen 4 zurück schwenken, sodass das im Aufnahmebehälter 2 befindliche Versandgut 3 nicht zurück auf die Überladebrücke 10 kippen kann.

In allen dargestellten Ausführungsbeispielen können die Aufnahmebehälter 2 in und entgegen der Beschickungsrichtung B offen ausgestaltet sein, sodass das Versandgut 3 in der Beschickungsrichtung B in den Aufnahmebehälter 2 hinein und in der Beschickungsrichtung B aus dem Aufnahmebehälter 2 heraus verschiebbar ist. Versandgut 3, das zuerst in den Aufnahmebehälter 2 hinein geschoben wurde, kann somit auch zuerst aus dem Aufnahmebehälter 2 heraus geschoben werden. Vor allem wenn das Versandgut 3 mehrfach und beispielsweise nach dem Radixsort-Verfahren sortiert werden soll, ist die Zuerstherein-zuerst-hinaus-Reihenfolge beim Be- und Entladen des Aufnahmebehälters 2 notwendig.

Die Erfindung betrifft also einen Transportwagen 1, eine Überladebrücke 10, eine Versandgutsortieranlage 40 und einen Nachrüstsatz X für eine Versandgutsortiermaschine 20. Um zu gewährleisten, dass Versandgut 3 einfach von der Versandgutsortiermaschine 20 entnommen und zu einem weiteren Sortierschritt transportiert werden kann, ist erfindungsgemäß vorgesehen, dass der Transportwagen 1 mehrere übereinander angeordnete Aufnahmebehälter 2 zur Aufnahme von Versandgut aufweist, wobei zumindest einer der Aufnahmebehälter 2 einen verschiebbaren Boden 7 und die Überladebrücke 10 eine Antriebseinrichtung 12 für den verschiebbaren Boden 7 des zumindest einen Aufnahmebehälters 2 aufweist.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Transportwagen (1) zum Transport von Versandgut (3), mit mehreren übereinander angeordneten Aufnahmebehältern (2) zur Aufnahme von Versandgut (3) von einer Versandgutsortiermaschine (20),
**dadurch gekennzeichnet, dass** zumindest einer der Aufnahmebehälter (2) einen verschiebbaren Boden (7) aufweist.

2. Transportwagen (1) nach Anspruch 1,
**dadurch gekennzeichnet, dass** der Boden (7) entlang einer Beschickungsrichtung (B), in der das Versandgut (3) in den Aufnahmebehälter (2) bewegbar ist, verschiebbar ist.

3. Transportwagen (1) nach Anspruch 1 oder 2,
**dadurch gekennzeichnet, dass** der Transportwagen (1) eine bewegungsübertragend mit dem Boden (7) verbundene Abtriebseinrichtung (9) aufweist.

4. Transportwagen (1) nach Anspruch 3,
**dadurch gekennzeichnet, dass** die Abtriebseinrichtung (9) ausgebildet ist, eine mechanische Bewegung aufzunehmen und an den Boden (7) zu übertragen.

5. Transportwagen (1) nach einem der Ansprüche 1 bis 4,
**dadurch gekennzeichnet, dass** der Boden (7) durch ein Förderband (8) gebildet ist.

6. Transportwagen (1) nach einem der Ansprüche 1 bis 5,
**dadurch gekennzeichnet, dass** die Aufnahmebehälter (2) durch den Transportwagen (1) in der Höhe (H) verschieblich gehalten sind.

7. Überladebrücke (10) zum Überladen von Versandgut (3) von einer Versandgutsortiermaschine (20) an einen Transportwagen (1), der mehrere übereinander angeordnete Aufnahmebehälter (2) aufweist
**dadurch gekennzeichnet, dass** die Überladebrücke (10) eine Antriebseinrichtung (12) für einen verschiebbaren Boden (7) zumindest eines Aufnahmebehälters (2) eines Transportwagens (1) aufweist, die auf einer Entladeseite (14) der Überladebrücke (10) angeordnet ist.

8. Überladebrücke (10) nach Anspruch 7,
**dadurch gekennzeichnet, dass** die Antriebseinrichtung (12) ausgebildet ist, eine Bewegung in eine Abtriebseinrichtung (9) eines Transportwagens (1) nach einem der Ansprüche 1 bis 6 einzuleiten.

9. Überladebrücke (10) nach Anspruch 7 oder 8,
**dadurch gekennzeichnet, dass** die Überladebrücke (10) an ihrer Entladeseite (14) eine schwenkbare Überbrückungsklappe (13) aufweist, die in ihrer Betriebsstellung (S) eine Überladefläche (11) der Überladebrücke (10) verlängert.

10. Überladebrücke (10) nach Anspruch 9,
**dadurch gekennzeichnet, dass** die Überbrückungsklappe (13) in ihrer Betriebsstellung (S) in einer Höhenrichtung (H) über der Antriebseinrichtung (12) angeordnet ist.

11. Überladebrücke (10) nach einem der Ansprüche 7 bis 10,
**dadurch gekennzeichnet, dass** die Überladebrücke (10) an ihrer Beladeseite (15) eine Montageeinrichtung (16) zur Montage an einer Versandgutsortiermaschine (20) aufweist.

12. Überladebrücke (10) nach Anspruch 11,
**dadurch gekennzeichnet, dass** die Montageeinrichtung (16) zumindest einen Teil einer Linearführung (17) aufweist, die in einem an der Versandgutsortiermaschine (20) montierten Zustand der Überladebrücke (10) ein geführtes Bewegen der Überladebrücke 10) entlang der Versandgutsortiermaschine (20) ermöglicht.

13. Versandgutsortieranlage (40) mit einer Versandgutsortiermaschine (20),
**gekennzeichnet durch**
einen Transportwagen (1) nach einem der Ansprüche 1 bis 6.

14. Nachrüstsatz (X) für eine Versandgutsortiermaschine (20),
**gekennzeichnet durch**
einen Transportwagen (1) nach einem der Ansprüche 1 bis 6.

15. Nachrüstsatz (X) nach Anspruch 14,
**gekennzeichnet durch**
eine Überladebrücke (10) nach einem der Ansprüche 7 bis 12.

## Claims

1. Truck (1) for the transporting of items being dispatched (3), with several receptacles (2) arranged one above the other for the acceptance of items being dispatched (3) from a sorting machine for items being dispatched (20),
**characterised in that**
at least one of the receptacles (2) has a displaceable floor (7).

2. Truck (1) according to claim 1,
**characterised in that**
the floor (7) along a feed direction (B) in which the item being dispatched (3) can be moved into the receptacle (2) is displaceable.

3. Truck (1) according to claim 1 or 2,
**characterised in that**
the truck (1) has a driving device (9) connected to the floor (7) in a motion-transmitting manner.

4. Truck (1) according to claim 3,
**characterised in that**
the driving device (9) is designed to absorb a mechanical movement and transfer it to the floor (7).

5. Truck (1) according to one of claims 1 to 4,
**characterised in that**
the floor (7) is formed by a conveyor belt (8).

6. Truck (1) according to one of claims 1 to 5,
**characterised in that**
the receptacle (2) is held by the truck (1) in a heightwise (H) displaceable manner.

7. Loading bridge (10) for the loading of items being dispatched (3) from a sorting machine for items being dispatched (20) to a truck (1) which has a number of receptacles (2) arranged one above the other
**characterised in that**
the loading bridge (10) has a driving device (12) for a displaceable floor (7) of at least one receptacle (2) of a truck (1) which is arranged on an unloading side (14) of the loading bridge (10).

8. Loading bridge (10) according to claim 7,
**characterised in that**
the driving device (12) is designed to initiate a movement in a driving device (9) of a truck (1) according to one of claims 1 to 6.

9. Loading bridge (10) according to claim 7 or 8,
**characterised in that**
the loading bridge (10) has a pivotable bridging flap (13) on its unloading side (14) which extends a loading area (11) of the loading bridge (10) in its operational position (S).

10. Loading bridge (10) according to claim 9,
**characterised in that**
the bridging flap (13) is arranged in a height direction (H) above the driving device (12) in its operational position (S).

11. Loading bridge (10) according to one of claims 7 to 10,
**characterised in that**
the loading bridge (10) has an assembly device (16) on its loading side (15) for assembly on a sorting machine for items being dispatched (20).

12. Loading bridge (10) according to claim 11,
**characterised in that**
the assembly device (16) has at least part of a linear guide (17) which, when the loading bridge (10) is mounted on the sorting machine for items being dispatched (20), enables the guided movement of the loading bridge (10) along the sorting machine for items being dispatched (20).

13. Sorting system for items being dispatched (40) with a sorting machine for items being dispatched (20),
**characterised by**
a truck (1) according to one of claims 1 to 6.

14. Retrofit kit (X) for a sorting machine for items being dispatched (20),
**characterised by**
a truck (1) according to one of claims 1 to 6.

15. Retrofit kit (X) according to claim 14,
**characterised by**
a loading bridge (10) according to one of claims 7 to 12.

## Revendications

1. Chariot de transport (1) destiné au transport d'articles à expédier (3), avec plusieurs récipients (2) disposés les uns par-dessus les autres destinés à la réception d'articles à expédier (3) par une machine de tri d'articles à expédier (20), **caractérisé en ce que**
au moins l'un des récipients (2) présente un fond coulissant (7) .

2. Chariot de transport (1) selon la revendication 1, **caractérisé en ce que**
le fond (7) peut coulisser le long d'une direction de chargement (B) dans laquelle les articles à expédier (3) sont mobiles dans le récipient (2).

3. Chariot de transport (1) selon la revendication 1 ou 2, **caractérisé en ce que**
le chariot de transport (1) présente un dispositif entraîné (9) relié au fond (7) par transmission de mouvement.

4. Chariot de transport (1) selon la revendication 3, **caractérisé en ce que**
le dispositif entraîné (9) est réalisé pour absorber un mouvement mécanique et le transmettre au fond (7).

5. Chariot de transport (1) selon l'une des revendications 1 à 4,
**caractérisé en ce que**
le fond (7) est formé par le biais d'un convoyeur à bande (8).

6. Chariot de transport (1) selon l'une des revendications 1 à 5,
**caractérisé en ce que**
les récipients (2) sont maintenus de manière coulissante à la hauteur (H) par le biais du chariot de transport (1).

7. Pont de transbordement (10) destiné au transbordement d'articles à expédier (3) par une machine de tri d'articles à expédier (20) vers un chariot de transport (1) qui présente plusieurs récipients (2) disposés les uns par-dessus les autres, **caractérisé en ce que**
le pont de transbordement (10) présente un dispositif d'entraînement (12) pour un fond coulissant (7) d'au moins un récipient (2) d'un chariot de transport (1), lequel dispositif d'entraînement est disposé sur un côté de déchargement (14) du pont de transbordement (10).

8. Pont de transbordement (10) selon la revendication 7, **caractérisé en ce que**
le dispositif d'entraînement (12) est réalisé pour initier un mouvement dans un dispositif entraîné (9) d'un chariot de transport (1) selon l'une des revendications 1 à 6.

9. Pont de transbordement (10) selon la revendication 7 ou 8, **caractérisé en ce que**
le pont de transbordement (10) présente au niveau de son côté de déchargement (14) un clapet de pontage pivotant (13) qui allonge une surface de transbordement (11) du pont de transbordement (10) dans sa position de fonctionnement (S).

10. Pont de transbordement (10) selon la revendication 9, **caractérisé en ce que**
le clapet de pontage (13) est disposé dans sa position de fonctionnement (S) dans une direction (H) de la hauteur au-dessus du dispositif d'entraînement (12).

11. Pont de transbordement (10) selon l'une des revendications 7 à 10,
**caractérisé en ce que**
le pont de transbordement (10) présente au niveau de son côté de chargement (15) un dispositif de montage (16) destiné à un montage au niveau d'une machine de tri d'articles à expédier (20) .

12. Pont de transbordement (10) selon la revendication 11, **caractérisé en ce que**
le dispositif de montage (16) présente au moins une partie d'un guidage linéaire (17) qui rend possible un mouvement guidé du pont de transbordement (10) le long de la machine de tri d'articles à expédier (20) dans un état monté au niveau de la machine de tri d'articles à expédier (20) du pont de transbordement (10).

13. Installation de tri d'articles à expédier (40) avec une machine de tri d'articles à expédier (20),
**caractérisée par**
un chariot de transport (1) selon l'une des revendications 1 à 6.

14. Kit d'équipement complémentaire (X) pour une machine de tri d'articles à expédier (20),
**caractérisé par**
un chariot de transport (1) selon l'une des revendications 1 à 6.

15. Kit d'équipement complémentaire (X) selon la revendication 14,
**caractérisé par**
un pont de transbordement (10) selon l'une des revendications 7 à 12.
